(19) Europäisches Patentamt

European Patent Office

Office européen des brevets

(11) Numéro de publication : **0 326 501 B1**

(12) **FASCICULE DE BREVET EUROPEEN**

(45) Date de publication du fascicule du brevet :
08.05.91 Bulletin 91/19

(21) Numéro de dépôt : **89420020.3**

(22) Date de dépôt : **26.01.89**

(51) Int. Cl.⁵ : **B23Q 5/38, F16H 19/00**

(54) Dispositif pour le réglage de la position d'une tête porte-outil le long d'un axe et procédé pour sa mise en oeuvre.

(30) Priorité : 26.01.88 FR 8801091

(43) Date de publication de la demande :
02.08.89 Bulletin 89/31

(45) Mention de la délivrance du brevet :
08.05.91 Bulletin 91/19

(84) Etats contractants désignés :
**BE CH DE ES FR GB IT LI NL SE**

(56) Documents cités :
**WO-A-86/05734**
**CH-A- 111 605**
**DE-A- 1 448 405**
**DE-C- 3 223 526**
**GB-A- 166 825**

(56) Documents cités :
**GB-A- 2 057 623**
**US-A- 2 309 578**
**US-A- 3 709 049**
**US-A- 3 850 043**

(73) Titulaire : **TECHNIFOR Société à**
**Responsabilité Limitée**
**11 Rue E. Pottier**
**F-69100 Villeurbanne (FR)**

(72) Inventeur : **Thérond, Marcel**
**8 Chemin Balme Baron**
**F-69140 Rillieux (FR)**

(74) Mandataire : **Monnier, Guy et al**
**Cabinet Monnier 150 Cours Lafayette B.P.**
**3058**
**F-69393 Lyon Cédex 03 (FR)**

EP 0 326 501 B1

## Description

Le dispositif et le procédé qui font l'objet de l'invention concernent selon les préambules des revendications 1 et 8, le réglage d'une tête porte-outil, mobile le long d'un axe et dont la position de travail est réglable en fonction des dimensions de la pièce sur laquelle l'outil monté sur le porte-outil doit intervenir.

Ce dispositif concerne les têtes porte-outil munies d'outils de toutes sortes tels que : outils de perçage, fraisage, ou autres. Il concerne plus particulièrement les têtes porte-outil munies d'un outil de marquage ou de gravure. Un dispositif comportant les caractéristiques des préambules des revendications 1 et 8 est décrit par exemple dans le document CH-A-111605.

On utilise le plus souvent pour amener une tête porte-outil à sa position de travail, un mécanisme à vis et écrou actionné de façon manuelle ou par un moyen moteur. Un tel mécanisme est relativement lent, en particulier si on souhaite une précision suffisante et aussi l'irréversibilité. Dans la pratique, lorsqu'on veut effectuer par exemple des opérations de marquage ou de gravure sur des pièces différentes, ou en différents points d'une même pièce, le temps de réglage représente une fraction importante du temps d'exécution.

On a recherché la possibilité de réaliser un dispositif permettant d'effectuer un tel réglage de position d'une tête porte-outil mobile le long d'un axe, de façon beaucoup plus simple et rapide que par les moyens connus.

On a cherché en particulier la possibilité d'effectuer de façon manuelle une approche rapide de la position d'utilisation suivie d'un ajustement précis et relativement rapide, les deux opérations étant effectuées de façon consécutive sans perdre de temps. On a cherché aussi la possibilité de réaliser un dispositif permettant le déplacement d'une tête porte-outil le long d'un axe vertical ou horizontal ou formant un angle quelconque par rapport à l'horizontale.

On a cherché enfin la possibilité d'assurer de façon simple et efficace le blocage de la tête porte-outil le long de son axe pendant la période de travail de l'outil.

Le dispositif et le procédé qui font l'objets de l'invention permettent d'atteindre de tels résultats.

Le dispositif de réglage suivant l'invention permet de déplacer une tête porte-outil mobile le long d'un axe pour l'amener de façon rapide et précise jusqu'à un emplacement quelconque choisi le long de cet axe.

Ce dispositif comporte un moyen de guidage orienté selon l'axe de déplacement, avec lequel coopère un moyen de liaison coulissant, solidaire de la tête porte-outil et qui permet le déplacement de celle-ci le long de ce moyen de guidage et donc suivant cet axe de déplacement.

La tête porte-outil comporte un poulie montée libre en rotation sur un arbre autour de laquelle un câble tendu, dont l'une au moins des deux extrémités est fixée au voisinage de l'une des extrémités de moyen de guidage, effectue au moins un demi-tour ; une poignée de manoeuvre, montée libre en rotation autour de l'arbre qui porte la poulie, est mobile en translation sur cet arbre de façon à pouvoir soit venir en appui contre la paroi latérale de la poulie, par l'intermédiaire de surfaces de contact qui coopèrent de façon à mettre en prise la poignée de manoeuvre et la poulie, soit au contraire s'écarter de la poulie de façon que les surfaces de contact ne coopèrent plus et que la poignée de manoeuvre et la poulie soient libres en rotation l'une par rapport à l'autre.

De préférence, le moyen de liaison coulissant de la tête porte-outil est muni d'un moyen de verrouillage, actionné par un moyen de commande avec lequel coopère la poignée de manoeuvre par déplacement en translation le long de l'arbre qui la porte. Le moyen de verrouillage, sous l'action du moyen de commande, effectue soit le blocage de la tête porte-outil à l'emplacement où elle se trouve le long du moyen de guidage, soit au contraire libère cette tête porte-outil afin de permettre un déplacement le long du moyen de guidage.

Lorsque l'axe du moyen de guidage de la tête porte-outil est vertical ou incliné par rapport à l'horizontale, une extrémité du câble est fixée à l'extrémité supérieure du moyen de guidage ; le câble fait ensuite au moins un demi-tour autour de la poulie montée sur la tête porte-outil, puis retourne au voisinage de l'extrémité supérieure du moyen de guidage où il passe sur une poulie de renvoi au-delà de laquelle il est fixé à un contrepoids qui joue le rôle de tendeur et de masse d'équilibrage.

Lorsque l'axe du moyen de guidage est sensiblement horizontal, le câble dont l'une des extrémités est fixée au voisinage de l'une des extrémités du moyen de guidage, effectue au moins un tour autour de la poulie montée sur la tête porte-outil et se prolonge jusqu'au voisinage de l'autre extrémité du moyen de guidage où un moyen tendeur maintient le câble tendu de part et d'autre de la poulie.

Suivant un premier mode de réalisation de la poignée de manoeuvre, un moyen élastique maintient la poignée de manoeuvre en position écartée de la poulie, de façon que cette poignée soit libre en rotation.

Ce moyen de retenue élastique peut être une bille poussée par un ressort disposé dans un logement sensiblement radial ménagé dans l'arbre qui supporte la poignée de manoeuvre. Cette bille coopère avec une première gorge annulaire formée dans la paroi intérieure de la poignée, de façon à empêcher son déplacement le long de l'arbre. Les caractéristiques de ce moyen de retenue élastique, et le profil de la gorge, sont déterminés de façon à permettre le déplacement de la poignée de manoeuvre le long de l'arbre, en direction de la poulie ou en direction opposée, sous l'action d'une force dépassant une valeur bien définie.

Une deuxième gorge annulaire peut avantageusement être formée dans la paroi intérieure de la poignée de manoeuvre, de façon à coopérer avec la bille du moyen de retenue élastique pour une position de la poignée de manoeuvre située à une distance différente de la poulie, position dans laquelle la poignée de manoeuvre coopère avec le moyen de commande qui actionne le moyen de verrouillage et bloque ainsi la tête porte-outil.

Suivant un deuxième mode de réalisation de la poignée de manoeuvre, le moyen de commande du moyen de verrouillage est logé dans un emplacement entouré par la paroi intérieure de la poignée de manoeuvre. Une tige radiale, poussée vers l'extérieur par un moyen élastique, agit sur ce moyen de commande de façon à provoquer le blocage de la tête porte-outil par l'intermédiaire du moyen de verrouillage, lorsque l'extrémité de cette tige radiale s'engage dans une gorge ménagée dans la paroi intérieure de la poignée de manoeuvre.

Les caractéristiques de cette tige et du moyen de poussée élastique, ainsi que le profil de la gorge, sont déterminés de façon à permettre le déplacement de la poignée de manoeuvre le long de l'arbre en direction de la poulie ou dans la direction opposée, sous l'action d'une force dépassant une valeur bien définie. La sortie de l'extrémité de la tige de la gorge sous l'action d'une telle force provoque le déblocage de la tête porte-outil.

Un tel déblocage est obtenu soit quand on pousse la poignée de manoeuvre vers la poulie, de façon à mettre en prise leur surface de contact, soit lorsqu'on pousse la poignée de manoeuvre en l'éloignant de la poulie, de façon à pouvoir déplacer la tête porte-outil de façon manuelle.

L'invention concerne aussi un procédé de réglage d'une tête porte-outil munie d'un moyen de liaison coulissant qui lui permet de se déplacer suivant un axe le long d'un moyen de guidage afin d'amener cette tête porte-outil jusqu'à un emplacement quelconque, choisi le long de cet axe, dans un minimum de temps et avec une précision suffisante.

Selon ce procédé, on effectue dans une première phase un déplacement rapide de la tête porte-outil le long de moyen de guidage en l'entraînant au moyen d'une poignée de manoeuvre montée libre en rotation sur un arbre, de façon à l'amener au voisinage de l'emplacement choisi ; dans une deuxième phase, on déplace la poignée de manoeuvre le long de l'arbre de façon à revenir en prise avec une poulie par l'intermédiaire de surfaces de contact aménagées sur la poulie et la poignée de façon à coopérer, puis on fait tourner cette poignée dans le sens voulu pour déplacer cette poulie – et donc la tête porte-outil sur laquelle elle est montée – le long d'un câble tendu qui fait au moins un demi-tour autour de la poulie et qui est fixé par au moins l'une de ces extrémités à une extrémité du moyen de guidage, et enfin on interrompt l'entraînement en rotation de la poignée à l'instant où la tête porte-outil atteint l'emplacement choisi.

De façon avantageuse, on bloque la tête porte-outil lorsqu'elle a atteint l'emplacement choisi en déplaçant la poignée de manoeuvre le long de l'arbre qui la porte en l'éloignant de la poulie, de façon à ce qu'elle vienne agir sur un moyen de commande qui provoque le verrouillage de la liaison coulissante entre la tête porte-outil et le moyen de guidage.

Les exemples et figures ci-après décrivent de façon non limitative les modes de réalisation du dispositif et du procédé suivant l'invention.

La figure 1 est une vue schématique en élévation d'un premier mode de réalisation du dispositif suivant l'invention.

La figure 2 est une vue suivant la flèche F1 du dispositif de la figure 1.

La figure 3 est une vue schématique, en coupe partielle à plus grande échelle suivant un plan contenant l'axe XI-XI, du mode de montage de la poulie et de la poignée de manoeuvre du dispositif des figures 1 et 2.

La figure 4 est une vue schématique en élévation d'un deuxième mode de réalisation du dispositif suivant l'invention.

La figure 5 est une vue suivant la flèche F2 du dispositif de la figure 4.

La figure 6 représente à plus grande échelle un mode particulier de réalisation de la poignée de manoeuvre suivant l'invention.

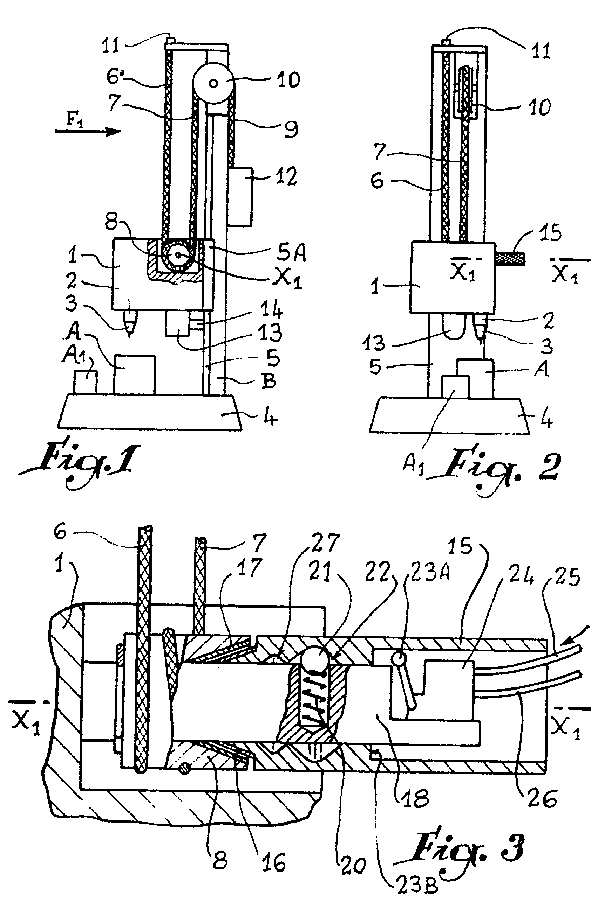

Les figures 1 à 3 montrent de façon schématique un premier mode de réalisation du dispositif suivant l'invention.

La tête porte-outil 1 peut se déplacer suivant un axe vertical le long d'un moyen de guidage B. Cette tête porte-outil comporte un outil de marquage 3 monté sur un support 2, apte à déplacer l'outil dans un plan horizontal suivant deux axes de façon connue et non représentée.

Des moyens d'entraînement de ce support 2, également connus et non représentés, permettent de l'actionner de façon déterminée. Le moyen de guidage B est muni de glissières verticales 5, le long desquelles se déplace la tête porte-outil 1, grâce au moyen de liaison coulissant 5A. Le moyen de guidage est supporté par une pièce de base 4 sur laquelle sont disposées les pièces A et A1 qu'il s'agit de marquer.

La tête porte-outil 1 est supportée par un câble dont l'une des extrémités est fixée en 11 à l'extrémité supérieure du moyen de guidage B.

La partie 6 de ce câble est tendue entre le point de fixation 11 et la poulie 8. Le câble effectue ensuite un tour et demi autour de cette poulie, comme on le voit sur la figure 3, puis est renvoyé en 7 vers le haut, puis, après passage sur une poulie de renvoi 10, redescend en 9, son extrémité étant attachés à un contrepoids 12. Ce contrepoids joue le rôle de tendeur de câble et de masse déquilibrage de la tête porte-outil.

Comme le montre la figure 3, la poignée de manoeuvre 15 est montée libre en rotation sur un arbre 18. Il en est de même pour la poulie 8. La poignée 15 et la poulie 8 comportent des surfaces de contact correspondantes 16, 17, de forme tronconique mâle et femelle qui viennent en prise l'une contre l'autre lorsque la poignée 15 est poussée le long de l'arbre en direction de la poulie 8. Une bonne adhérence est obtenue en recouvrant ces zones de contact 16 et 17 d'une matière caoutchoutée. Un moyen de retenue élastique permet de maintenir la poignée 15 écartée de la poulie 8, de façon à séparer les zones de contact 16 et 17 l'une de l'autre lorqu'on veut effectuer un déplacement rapide de la tête porte-outil 1, en agissant directement sur la poignée de manoeuvre 15. Ce moyen de retenue comporte une bille 21 poussée radialement par un ressort 20 logé dans la première gorge annulaire 22 formée dans la paroi intérieure de la poignée de manoeuvre 15 lorsque celle-ci est suffisamment écartée de la poulie 8. En exerçant une poussée suffisante sur la poignée de manoeuvre, on peut soit la mettre en prise avec la poulie 8, soit l'amener au contact d'un moyen de commande 23 par une butée annulaire 23B qui déplace ce moyen de commande jusqu'à l'établissement du circuit d'air comprimé 25, 26 par ouverture de la valve 24. Ce circuit actionne le moyen de verrouillage constitué par un vérin 13 dont la tige 14 vient en appui sur la glissière 5. La tête porte-outil est alors bloquée dans la position où elle se trouve sur le moyen de guidage, ce qui permet d'effectuer toute opération de marquage sans risque de déplacement vertical de cette tête porte-outil. Pour maintenir la poignée 15 dans la position de verrouillage, une deuxième gorge annulaire 27 est formée dans la paroi intérieure de la poignée de manoeuvre 15, de sorte que la bille 21 s'engage dedans lorsque la poignée est en appui contre le moyen de commande 23A dans la position d'ouverture de la valve 24.

Les figures 4 et 5 montrent de façon schématique un deuxième mode de réalisation du dispositif suivant l'invention.

Ces figures montrent une tête porte-outil 30 qui peut se déplacer sur un axe horizontal le long d'un moyen de guidage 31. Un moyen de liaison coulissant 32, solidaire de la tête porte-outil 30, se déplace le long de glissières 33. La tête porte-outil 30 comporte un outil de marquage 34 monté sur un support 35. Un câble 36, 37 est fixé à une extrémité 38 du moyen de guidage 31, puis, après avoir fait un tour complet de la poulie à gorge 39, est relié à l'autre extrémité du moyen de guidage par un moyen tendeur 40, constitué par un ressort hélicoïdal, qui assure la tension du câble, de sorte que ce câble ne glisse par autour de la poulie lorsqu'on fait tourner celle-ci.

Comme dans le cas de la figure 3, une poignée de manoeuvre 41 est montée libre en rotation sur un arbre 42 d'axe X2-X2, sur lequel la poulie 39 est également libre en rotation. Des surfaces de contact 43, 44 revêtues de caoutchouc, permettent de mettre en prise la poignée de manoeuvre 41 et la poulie 39, en exerçant une pression suffisante de la poignée en direction de la poulie. Au contraire, lorsque la poignée de manoeuvre 41 est écartée de la poulie 39, il suffit d'exercer une poussée suffisante sur cette poignée de manoeuvre 41, dans une direction parallèle à l'axe du moyen de guidage, pour déplacer rapidement la tête porte-outil 30 le long de ce moyen de guidage 31, jusqu'au voisinage du point qu'on se propose d'atteindre. On effectue alors un réglage précis en mettant en prise les surfaces de contact 43, 44 de la poignée de manoeuvre et de la poulie, puis en faisant tourner la poignée dans le sens souhaité de façon à déplacer la poulie le long du câble, et donc la tête porte-outil le long du moyen de guidage de la quantité nécessaire pour atteindre le point visé. On peut alors, en écartant à fond la poignée 41 de la poulie 39, actionner par le bord extérieur 45 de la poignée ; le moyen de commande 46, figuré de façon purement schématique, qui provoque le verrouillage de la tête porte-outil sur le moyen de guidage, grâce à un vérin non représenté.

De nombreuses modifications peuvent être apportées au dispositif suivant l'invention décrit aux figures 1 à 5. Ainsi la poulie 8 (figure 3) peut comporter une gorge comme la poule 39 (figure 5). Le ressort 40 (figure 4) peut être remplacé par un autre moyen tendeur tel qu'un vérin, un poids ou autre.

Le moyen de verrouillage peut ne pas être un vérin mais un verrou actionné électriquement, par exemple.

Les surfaces de contact 15, 17 ou 43, 44 des figures 3 et 5 peuvent éventuellement comporter des reliefs et des creux, tels que des dentures qui coopèrent pour éviter tout glissement.

La poignée de manoeuvre 15 (figure 3) peut comporter une troisième gorge qui coopère avec la bille 21, pour maintenir en prise les surfaces de contact 16, 17 pendant le temps nécessaire au réglage de la position de la tête porte-outil 1.

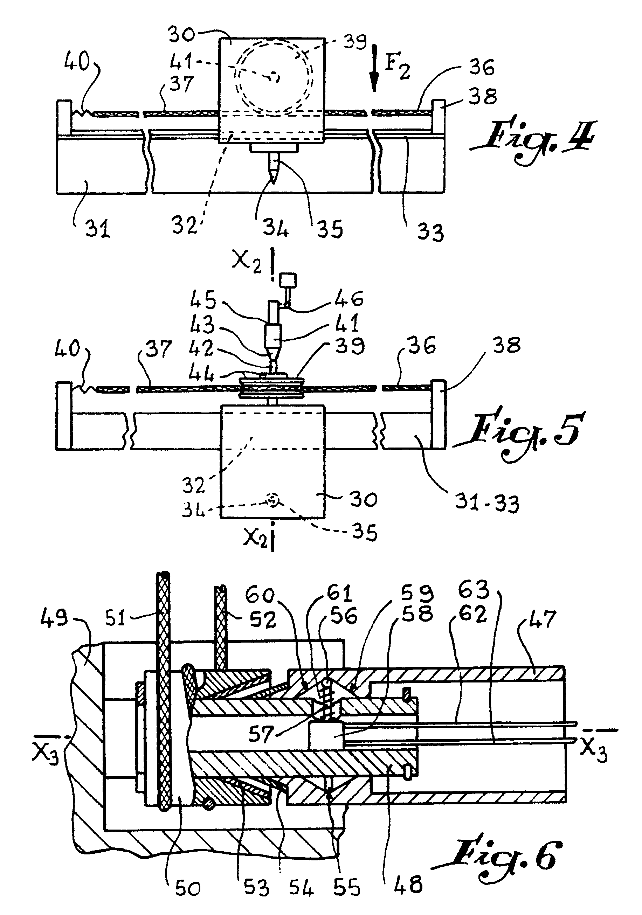

Enfin, la figure 6 montre un deuxième mode de réalisation de la poignée de manoeuvre d'un dispositif tel que celui de la figure 3. Selon cette figure 6, une poignée de manoeuvre 47 est montée, libre en rotation, et coulissante sur l'arbre 48, solidaire d'une tête porte-outil 49, dont seule la zone de fixation de l'arbre 48 est visible. Cette tête porte-outil 49 est apte à se déplacer verticalement par coulissement sur des glissières verticales non représentées. Elle est supportée de la même façon que la tête porte-outil 1 par un câble tendu qui fait un tour et demi autour de la poulie 50, et dont les deux parties, 51, 52 sont reliées l'une à un point fixe et l'autre à un contrepoids, non représentés l'un et l'autre.

Les surfaces tronconiques 53, 54 permettent de mettre en prise la poulie 50, libre en rotation sur l'arbre 48, et la poignée de manoeuvre 47, en rapprochant celle-ci de la poulie jusqu'au contact des surfaces tronconiques 53-54.

Grâce au profil particulier de la gorge 55 dans laquelle est logée l'extrémité 56 de la tige radiale 57 qui commande la valve 58, ce déplacement de la poignée de manoeuvre 47 pousse radialement la tige 57 vers l'axe X3-X3, par glissement de la boule d'extrémité 56 sur le congé de raccordement 59. Il en résulte une fermeture de la valve 58 qui était précédemment ouverte. Cette fermeture provoque le déblocage de la tête porte-outil 49 par le moyen de verrouillage, non représenté, qui est relie à la valve 58 par des canalisations de fluide pneumatique de commande 62, 63.

Ce déblocage permet donc l'entraînement en rotation de la poulie 50 par la poignée de manoeuvre 47, et le déplacement correspondant de la tête porte-outil 49 le long de son moyen de guidage. Pour bloquer à nouveau la tête porte-outil 49 par ouverture de la valve 58, il suffit d'écarter la poignée de manoeuvre 47 de la poulie, jusqu'à ce que la boule d'extrémité 56 de la tige radiale de commande 57 s'engage à nouveau dans la gorge 55, sous la poussée du ressort hélocoïdal 61 qui assure une retenue élastique de la poignée de manoeuvre dans cette position de blocage. On peut écarter davantage la poignée de manoeuvre 47, de façon à fermer à nouveau la valve 58, par glissement de la boule 56 sur le congé de raccordement 60. On atteint alors une position pour laquelle la poignée de manoeuvre permet par déplacement manuel d'obtenir un coulissement très rapide de la tête porte-outil le long du moyen de guidage avec libre rotation de la poulie 50.

## Revendications

1. Dispositif de réglage permettant de déplacer une tête porte-outil (1, 30) mobile le long d'un axe, pour l'amener de façon rapide et précise jusqu'à un emplacement quelconque choisi le long de cet axe, comportant un moyen de guidage (B, 31), orienté le long de cet axe avec lequel coopère un moyen de liaison coulissant (5A, 32), solidaire de la tête porte-outil qui permet le déplacement de celle-ci le long de ce moyen de guidage, caractérisé en ce que la tête porte-outil (1, 30) comporte une poulie (8, 39) montée libre en rotation sur un arbre (18, 42), autour de laquelle un câble (6, 7, 36, 37) tendu effectue au moins un demi tour, l'une des extrémités de ce câble étant reliée à un point fixe (11, 38) au voisinage d'une des extrémités du moyen de guidage (B, 31), et en ce qu'une poignée de manoeuvre (15, 41), montée libre en rotation autour de l'arbre (18, 42) qui porte la poulie (8, 39), est également mobile en translation sur cet arbre, de façon à pouvoir soit venir en appui contre la paroi latérale de la poulie par l'intermédiaire de surfaces de contact (16, 17, 43, 44), qui coopèrent de façon à mettre en prise la poignée de manoeuvre et la poulie, soit au contraire s'écarter de la poulie de sorte que les surfaces de contact ne coopèrent plus et que la poignée de manoeuvre et la poulie soient libres en rotation l'une par rapport à l'autre.

2. Dispositif suivant la revendication 1, caractérisé en ce que le moyen de liaison coulissant (5A, 32) de la tête porte-outil (1, 30, 49) est muni d'un moyen de verrouillage (13, 14) actionné par un moyen de commande (23A, 46, 56, 57) sur lequel agit la poignée de manoeuvre (15, 41, 47) par déplacement en translation sur l'arbre (18, 42, 48) qui la porte, ce moyen de verrouillage permettant de bloquer la tête porte-outil (1, 30, 49) par rapport au moyen de guidage (B, 31).

3. Dispositif suivant la revendication 2, caractérisé en ce que le moyen de commande (56-57) est logé dans un emplacement entouré par la paroi intérieure de la poignée de manoeuvre (47) et est actionné par translation de la poignée de manoeuvre (47) grâce au profil particulier (55, 59, 60) de cette paroi intérieure dans la zone où elle vient en contact avec la tige de commande (56, 57) de la valve (58) de ce moyen de commande.

4. Dispositif suivant la revendication 1 ou 2, caractérisé en ce que lorsque l'axe du moyen de guidage (31) est sensiblement horizontal, le câble dont l'une des extrémités (36) est fixée en un point (38) situé au voisinage de l'une des extrémités du moyen de guidage, effectue au moins un tour autour de la poulie (39) montée sur la tête porte-outil (30) et se prolonge (37) jusqu'au voisinage de l'autre extrémité du moyen de guidage, où un moyen tendeur (40) maintient le câble tendu de part et d'autre de la poulie (39).

5. Dispositif suivant l'une des revendications 1 à 4, caractérisé en ce qu'un moyen de retenue élastique maintient la poignée de manoeuvre en position écartée de la poulie.

6. Dispositif suivant la revendication 5, caractérisé en ce que le moyen de retenue élastique est une bille (21) poussée par un ressort (20), disposé dans un logement sensiblement radial ménagé dans l'arbre (18) qui supporte la poignée de manoeuvre (15), cette bille coopérant avec une première gorge annulaire (22) formée dans la paroi intérieure de la poignée de manoeuvre (15) de façon à empêcher son déplacement le long de l'arbre.

7. Dispositif suivant la revendication 6, caractérisé en ce qu'une deuxième gorge annulaire (27) est formée dans la paroi intérieure de la poignée de manoeuvre (15), à un emplacement tel que la bille (21) du moyen de retenue vient s'engager dedans lorsqu'on écarte la poignée de manoeuvre d'une quantité suffisante pour qu'elle agisse sur le moyen de commande (23A), qui actionne le moyen de verrouillage (13, 14) et bloque ainsi la tête porte-outil (1) sur le moyen de guidage (B).

8. Procédé de réglage d'une tête porte-outil (1, 30) munie d'un moyen de liaison coulissant (5A, 32), qui lui permet de se déplacer suivant un axe le long d'un moyen guidage (B, 31) jusqu'à un emplacement quelconque, choisi le long de cet axe, caractérisé en ce qu'on effectue, dans une première phase, un déplacement rapide de la tête porte-outil le long d'un moyen de guidage, en l'entraînant au moyen d'une poignée de manoeuvre (15, 41), montée libre en rotation sur un arbre (18, 42), de façon à l'amener au voisinage de l'emplacement choisi, et en ce que dans une deuxième phase, on déplace la poignée de manoeuvre le long de l'arbre de façon à venir en prise avec une poulie (8, 39), grâce à des surfaces de contact (16, 17, 43, 44) ménagées sur la poulie et la poignée de façon à coopérer, puis on fait tourner cette poignée dans le sens voulu pour déplacer cette poulie et donc la tête porte-outil sur laquelle elle est montée, le long d'un câble tendu (6, 7-36, 37) qui fait au moins un demi-tour autour de la poulie, et qui est fixé par au moins une de ces extrémités (11, 38) au voisinage d'une extrémité du moyen de guidage, et enfin on interrompt l'entraînement en rotation au moyen de la poignée de manoeuvre, à l'instant où la tête porte-outil atteint l'emplacement choisi.

9. Procédé suivant la revendication 8, caractérisé en ce que l'on bloque la tête porte-outil (1, 30) lorsqu'elle atteint l'emplacement choisi en déplaçant la poignée de manoeuvre (15, 41), le long de l'arbre (18, 42) qui la porte, en l'éloignant de la poulie, jusqu'à ce quelle vienne agir sur un moyen de commande (23A, 46), qui provoque le verrouillage de la liaison coulissante entre la tête porte-outil et le moyen de guidage.

**Ansprüche**

1. Steuervorrichtung zum Verschieben eines Werkzeughalterkopfes (1, 30), der längs einer Achse beweglich ist, um ihn schnell und genau an irgendeiner Stelle längs dieser Achse zu führen, die aus einem längs dieser Achse ausgerichteten Führungselement (B, 31), mit dem ein Gleitverbindungselement (5A, 32) zusammenarbeitet, das am Werkzeughalterkopf befestigt ist und das längs dieser Führungselementes verschiebbar ist, **dadurch gekennzeichnet,** daß der Werkzeughalterkopf (1, 30) eine Rolle (8, 39) aufweist, die auf einer Welle (18, 42) drehbar montiert ist, um die ein Seil (6, 7, 36, 37) mindestens eine halbe Umschlingung macht, dessen eines Ende an einem Festpunkt (11, 38) in der Nähe eines der Enden des Führungselementes (B, 31) festgelegt ist, und daß ein um die die Rolle (8, 39) tragende Welle (18, 42) drehbarer Bedienungsgriff (15, 41) gleichermaßen auf dieser Welle verschiebbar ist, so daß er entweder an den Seitenwänden der Rolle mittels Kontaktflächen (16, 17, 43, 44), welche so zusammenarbeiten, daß sie den Griff und die Rolle in Eingriff bringen, zur Anlage kommt oder im Gegensatz dazu sich von der Rolle entfernt, so daß die Kontaktflächen nicht mehr zusammenwirken und Handgriff und Rolle in Bezug aufeinander drehfrei sind.

2. Vorrichtung nach Anspruch 1, **dadurch gekennzeichnet,** daß das Gleitverbindungselement (5A, 32) des Werkzeughalterkopfes (1, 30, 49) mit einem Verriegelungselement (13, 14) versehen ist, das durch ein Steuerelement (23A, 46, 56, 57) betätigt wird, auf das der Bedienungsgriff (15, 41, 47) durch geradlinige Verschiebung auf der ihn tragenden Welle (18, 42, 48) einwirkt, wobei dieses Verriegelungselement eine Blockierung des Werkzeughalterkopfes (1, 30, 49) in bezug auf das Führungselement (B, 31) ermöglicht.

3. Vorrichtung nach Anspruch 2, **dadurch gekennzeichnet,** daß das Steuerelement (56-57) an einer von der Innenwand des Bedienungsgriffs (47) umgebenen Stelle angeordnet ist und durch Verschieben des Bedienungsgriffs (47) betätigbar ist aufgrund eines besonderen Profils (55, 59, 60) dieser Innenwand in dem Bereich, wo er mit der Steuerstange (56, 57) des Ventils (58) dieses Steuerelements in Berührung kommt.

4. Vorrichtung nach Anspruch 1 oder 2, **dadurch gekennzeichnet,** daß dann, wenn die Achse des Führungselements (31) genau horizontal ist, das Seil, dessen eines Ende (36) an einer Stelle (38) in der Nähe eines der Enden des Führungselementes befestigt ist, wenigstens eine Umschlingung um die Rolle (39) macht, die auf dem Werkzeughalterkopf (30) montiert ist, und sich bis in die Nähe des anderen Endes des Führungselementes verlängert (37), wo ein Spannelement (40) das Seil beiderseits der Rolle (39) spannt.

5. Vorrichtung nach einem der Ansprüche 1 bis 4, **dadurch gekennzeichnet,** daß ein elastisches Rückhalteelement den Bedienungsgriff von der Rolle entfernt hält.

6. Vorrichtung nach Anspruch 5, **dadurch gekennzeichnet,** daß das elastische Rückhalteelement eine Kugel (21) ist, die unter dem Druck einer Feder steht, welche in einem in der den Bedienungsgriff (15) tragenden Welle (18) genau radial angeordneten Raum angeordnet ist, wobei diese Kugel mit einer ersten ringförmigen Kehle (22) in der Innenwand des Bedienungsgriffs (15) so zusammenarbeitet, daß sie seine Verschiebung längs der Welle verhindert.

7. Vorrichtung nach Anspruch 6, **dadurch gekennzeichnet,** daß eine zweite ringförmige Kehle (27) in der Innenwand des Bedienungsgriffs (15) an einer Stelle so ausgebildet ist, daß die Kugel (21) des Rückhalteelementes dort in Eingriff kommt, wenn man den Bedienungsgriff so weit entfernt, daß er auf das Steuerelement (23A) einwirkt, welches das Verriegelungselement (13, 14) betätigt und somit den Werkzeughalterkopf (1) auf dem Führungselement (B) blockiert.

8. Verfahren zum Steuern eines Werkzeughalterkopfes (1, 30), der mit einem Gleitverbindungselement (5A, 32) versehen ist, das ihm erlaubt, sich längs einer Achse eines Führungselementes (B, 31) bis zu irgendeiner beliebigen Stelle auf dieser Achse zu verschieben, **dadurch gekennzeichnet**, daß in einer ersten Phase ein schnelles Verschieben des Werkzeughalterkopfes längs eines Führungselements bewirkt wird, indem er mittels eines auf einer Welle (18, 42) drehfest befestigten Bedienungsgriffs (15, 41) so bewegt wird, daß er in die Nähe der gewünschten Stelle gelangt, und daß in einer zweiten Phase der Bedienungsgriff längs der Welle so verschoben wird, daß er mit einer Rolle (8, 39) in Eingriff kommt mittels Kontaktflächen (16, 17, 43, 44), die auf der Rolle und dem Griff zusammenarbeiten, wonach dieser Griff in der gewünschten Richtung gedreht wird, um diese Rolle und somit den Werkzeughalterkopf, auf dem sie montiert ist, längs eines gespannten Seils (6, 7-36, 37) zu verschieben, das mindestens eine Umschlingung um die Rolle macht und das wenigstens mit einem seiner Enden (11, 38) in der Nähe eines Endes des Führungselementes befestigt ist, woraufhin die Drehbewegung mittels des Bedienungsgriffes in dem Moment unterbrochen wird, wo der Werkzeughalterkopf die gewünschte Stelle erreicht.

9. Verfahren nach Anspruch 8, **dadurch gekennzeichnet**, daß der Werkzeughalterkopf (1, 30) beim Erreichen der gewünschten Stelle dadurch blockiert wird, daß der Bedienungsgriff (15, 41) längs der ihn tragenden Welle (18, 42) verschoben wird, indem die Rolle entfernt wird, bis er auf ein Steuerelement (23A, 46) einwirkt, das die Verriegelung der Gleitverbindung zwischen dem Werkzeughalterkopf und dem Führungselement bewirkt.

## Claims

1. Adjustment device, which permits a displaceable tool-holder head (1, 30) to be displaced along an axis, in order to move it, in a rapid and accurate manner, as far as any selected location along this axis, comprising a guide means (B, 31), orientated along this axis, with which them cooperates a means of sliding connection (5A, 32), integrally connected to the tool-holder head which permits the displacement of the latter along this guide means, characterised in that the tool-holder head (1, 30) comprises a pulley (8, 39), which is mounted so as to rotate freely on a shaft (18, 42), around which a tensioned cable (6, 7, 36, 37) effects at least one half-turn, one of the ends of this cable being connected to a fixed point (11, 38) in the vicinity of one of the ends of the guide means (B, 31), and in that an operating handle (15, 41), which is mounted so as to rotate freely around the shaft (18, 42) which carries the pulley (8, 39), is also displaceable on this shaft, so that it can either be supported against the lateral wall of the pulley through the intermediary of contact surfaces (16, 17, 43, 44), which cooperate with one another so as to engage with the operating handle and the pulley, or on the contrary be moved away from the pulley so that the contact surfaces no longer co-operate with one another, and so that the operating handle and the pulley are free to rotate one relative to the other.

2. Device according to claim 1, characterised in that the means of sliding connection (5A, 32) of the tool-holder head (1, 30, 49) is provided with a locking means (13, 14), which is actuated by a control means (23A, 46, 56, 57), upon which the operating handle (15, 41, 47) acts, by being displaced along the shaft (18, 42, 48) which carries it, this locking means permitting the tool-holder head (1, 30, 49) to be locked relative to the guide means (B, 31).

3. Device according to claim 2, characterised in that the control means (56-57) is accommodated in a location surrounded by the internal wall of the operating handle (47) ans is actuated by movement of the operating handle (47) due to the particular profile (55, 59, 60) of this internal wall in the area where it comes into contact with the control rod (56, 57) of the valve (58) of this control means.

4. Device according to claim 1 or 2, characterised in that, when the axis of the guide means (31) is substantially horizontal, the cable, of which one of the ends (36) is fixed at a point (38) situated in the vicinity of one of the ends of the guide means, effects at least one turn around the pulley (39) mounted on the tool-holder head (30) and extends (37) to the vicinity of the other end of the guide means, where a tensioning means (40) keeps the cable taut on both sides of the pulley (39).

5. Device according to one of claims 1 or 4, characterised in that a resilient retaining means keeps the operating handle in a position away from the pulley.

6. Device according to claim 5, characterised in that the resilient retaining means is a ball (21) pushed by a spring (20), disposed in a substantially radial seating provided in the shaft (18) which supports the operating handle (15), this ball co-operating with a first annular groove (22) formed in the internal wall of the operating handle (15) so as to prevent its being displaced along the shaft.

7. Device according to claim 6, characterised in that a second annular groove (27) is formed in the internal wall of the operating handle (15), at a location such that the ball (21) of the retaining means engages therein when the operating handle is moved away by a sufficient amount for it to act upon the control means (23A), which actuates the locking means (13, 14) and, in consequence, locks the tool-holder head (1) on the guide means (B).

8. Method or adjusting a tool-holder head (1, 30), which is provided with a means of sliding connection (5A, 32), which permits it to be displaced following an axis along a guide means (B, 31) to any selected location along this axis, characterised in that, in a first phase, a rapid displacement of the tool-holder head is effected along a guide means, by entraining it by means of an operating handle (15, 41), which is mounted so as to rotate freely on a shaft (18, 42), so that it is brought into the vicinity of the selected location, and in that, in a second phase, the operating handle is displaced along the shaft so as to engage with a pulley (8, 39), due to contact surfaces (16, 17, 43, 44) provided on the pulley and the handle in such a manner that they co-operate with one another, then this handle is rotated in the desired direction to displace this pulley and, therefore, the tool-holder head on which it is mounted, along a tensioned cable (6, 7-36, 37), which makes at least one half-turn around the pulley, and which is fixed by at least one of these ends (11, 38) in the vicinity of one end of the guide means, and finally the rotational entrainment is interrupted by means of the operating handle, at the moment when the tool-holder head reaches the selected location.

9. Method according to claim 8, characterised in that the tool-holder head (1, 30) is locked when it reaches the selected location by displacing the operating handle (15, 41) along the shaft (18, 42) which carries it, by moving it away from the pulley, until it acts upon a control means (23A, 46), which causes the locking of the sliding connection between the tool-holder head and the guide means.

Fig.1

Fig. 2

Fig. 3

*Fig. 4*

*Fig. 5*

*Fig. 6*